# FASCICULE DE BREVET EUROPEEN

(11) **EP 1 874 006 B1**
(45) Date de publication et mention de la délivrance du brevet: **27.05.2009**
(21) Numéro de dépôt: 07109665.5
(22) Date de dépôt: 05.06.2007
(51) Int. Cl.: H04L 29/12

(54) **Procédé et dispositif de connexion d'une machine cliente**
Verfahren und Vorrichtung zum Anschluss einer Client-Maschine
Method and device for connecting a client machine

(30) Priorité: 30.06.2006 FR 0652758
(43) Date de publication de la demande: 02.01.2008
(73) Titulaire: SAGEM COMMUNICATIONS SAS, 75015 Paris (FR)
(72) Inventeur: Morard, Jean Pierre, 75015, PARIS (FR)
(74) Mandataire: Schmit, Christian Norbert Marie

(56) Documents cités:
- WO-A-01/71983
- WO-A-02/09106
- US-A1- 2002 143 968

## Description

La présente invention a pour objet un procédé et un dispositif de connexion d'une machine cliente, typiquement un décodeur de signaux de télévision, à un réseau domestique de distribution de signaux de télévision. Ces signaux sont entendus au sens large comme pouvant contenir des signaux d'images, de sons, de données, ou de commande. Ces données peuvent concerner des informations éditables sur un moniteur de visualisation relié au décodeur, ou des informations mémorisables dans, ou gérables par, le décodeur. L'invention vise à faciliter la connexion.

Dans le domaine domestique, typiquement celui des particuliers à leur domicile, des réseaux de distribution de signaux de télévision peuvent être installés. La liaison utilisée pour ces réseaux peut être un couple de paires torsadées d'un réseau de type ethernet, un câble coaxial, une liaison par courants porteurs, voire une liaison radioélectrique de type WIFI ou autre.

Le problème de connexion rencontré est celui de l'attribution à la machine cliente, au décodeur, d'une adresse sur le réseau. Normalement, de tels problèmes devraient être résolus par l'emploi du protocole de communication DHCP qui prévoit une telle attribution d'adresse pour les nouveaux appareils connectés à un réseau.

DHCP signifie Dynamic Host Configuration Protocol. Il s'agit d'un protocole qui permet à une machine, typiquement un ordinateur, qui se connecte sur un réseau d'obtenir dynamiquement (c'est-à-dire sans intervention particulière) sa configuration (principalement, sa configuration réseau). En application de ce protocole, au moment de la connexion, la seule commande à lancer est celle de demander à la machine de se trouver une adresse, dans la pratique une adresse IP compatible avec le protocole Internet. La machine trouve cette adresse toute seul par DHCP. La suite des opérations étant automatique on aboutit à une simplification de l'administration d'un réseau.

Le fonctionnement du protocole DHCP est le suivant. Il faut dans un premier temps un serveur DHCP qui distribue des adresses IP. Ce serveur DHCP sert de base pour toutes les requêtes DHCP. Aussi, ce serveur doit avoir une adresse IP fixe. Dans un réseau, on peut donc n'avoir qu'une seule machine avec adresse IP fixe, le serveur DHCP.

Quand une machine est démarrée, elle n'a aucune information sur sa configuration réseau, et surtout, il est souhaité qu'elle n'ait rien à faire de particulier pour trouver une adresse IP. Dans ce but, la technique utilisée est la diffusion : pour trouver et dialoguer avec un serveur DHCP, la machine va simplement émettre un paquet spécial de diffusion sur le réseau local (sur l'adresse 255.255.255.255). Le paquet spécial peut comporter, outre la requête, d'autres informations comme le type de requête, les ports de connexion disponibles.... Lorsque le serveur DHCP reçoit le paquet spécial, il renvoie un autre paquet de diffusion. En effet, la machine cliente n'a pas forcement une adresse IP et donc elle n'est pas nécessairement joignable directement. Le paquet de diffusion renvoyé contient toutes les informations requises pour la machine cliente.

Un seul paquet spécial pourrait suffire à la bonne marche du protocole. En fait, il existe plusieurs types de paquets DHCP susceptibles d'être émis soit par le client pour le ou les serveurs, soit par le serveur vers un client. On distingue notamment les paquets
- DHCPDISCOVER servant à localiser les serveurs DHCP disponibles;
- DHCPOFFER qui sont les réponses du serveur DHCP à un paquet DHCPDISCOVER, qui contient des premiers paramètres, et notamment une offre d'adresse sur le réseau;
- DHCPREQUEST qui concernent une requête diverse du client, pour par exemple prolonger son bail, et surtout pour accepter l'adresse IP offerte;
- DHCPACK est la réponse du serveur DHCP au client. Elle contient des paramètres et l'adresse IP du client, confirmant que l'adresse IP qui lui était offerte et qu'il a provisoirement accepté lui est allouée;
- DHCPNAK est la réponse du serveur DHCP pour signaler au client que son bail est échu, ou que ce client annonce une mauvaise configuration réseau;
- DHCPDECLINE avec lequel le client annonce au serveur que l'adresse est déjà utilisée;
- DHCPRELEASE avec lequel le client libère son adresse IP; et
- DHCPINFORM avec lequel le client demande des paramètres locaux, il a déjà son adresse IP.

A l'issue de l'attribution d'adresse, l'organe attributeur d'adresse IP, le serveur DHCP, ou un autre organe émet une requête ARP (Address Resolution Protocol - Protocole de résolution des problèmes d'adresse). Cette requête ARP, qui est de niveau 3 de la couche OSI, comporte un message de question (who has? - qui possède?) et un message de réponse (reply). Ce couple de messages permet de faire connaître à tout le réseau la correspondance entre une l'adresse physique MAC d'une carte réseau d'une machine connectée sur le réseau et une adresse IP qui a été attribuée à cette machine.

Le premier paquet émis par la machine cliente est donc un paquet de type DHCPDISCOVER. Le serveur DHCP répond par un paquet DHCPOFFER, en particulier pour soumettre une adresse IP au client. Le client établit sa configuration, puis émet un paquet DHCPREQUEST pour valider son adresse IP (requête en diffusion car DHCPOFFER ne contient par son adresse IP). Le serveur DHCP répond simplement par un DHCPACK avec l'adresse IP pour confirmation de l'attribution. Normalement, c'est suffisant pour qu'un client obtienne une configuration réseau efficace, mais cela peut être plus ou moins long selon que le client accepte ou non l'adresse IP.

Pour des raisons d'optimisation des ressources réseau, les adresses IP sont délivrées avec une date de début et une date de fin de validité. C'est ce qu'on appelle un bail. Un client qui voit son bail arriver à terme peut demander au serveur DHCP une prolongation du bail par un DHCPREQUEST. De même, lorsque le serveur DHCP verra un bail arriver à terme, il émettra un paquet DHCPNAK pour demander au client s'il veut prolonger son bail. Si le serveur DHCP ne reçoit pas de réponse valide, il rend disponible l'adresse IP. Selon le protocole DHCP, on peut optimiser l'attribution des adresses IP en jouant sur la durée des baux. En effet, si aucune adresse n'est jamais libérée, au bout d'un certain temps, plus aucune requête DHCP ne peut être satisfaite, faute d'adresses à distribuer.

Sur un réseau où beaucoup d'ordinateurs se branchent et se débranchent souvent (réseau d'école ou de locaux commerciaux par exemple), il est intéressant de proposer des baux de courte durée. A l'inverse, sur un réseau constitué en majorité de machines fixes, très peu souvent redémarrées, typiquement des réseaux domestiques des baux de longues durées suffisent.

Un tel réseau est décrit dans le document US 2002143968.

Un problème survient toutefois lorsque dans un réseau plusieurs serveurs DHCP coexistent. Ce problème est d'autant plus fréquent que des concepteurs de machines, imaginant qu'aucun serveur DHCP ne sera présent sur le réseau, ont tendance à doter chaque machine d'une fonction serveur DHCP. Cette situation est particulièrement rencontrée dans le domaine de la diffusion domestique de signaux de télévision. Par exemple dans ce domaine, on rencontre habituellement des installations avec une passerelle entre un réseau interne et un point d'accès à un réseau de distribution, avec un serveur de services connecté au réseau interne, et avec une machine cliente du service, également connectée au réseau interne.

Le réseau de distribution peut-être de type Internet, câble, diffusion hertzienne, connexion ADSL ou autre. Le réseau interne est le réseau domestique.

Le serveur de services peut être un décodeur de télévision muni de moyens de décoder des signaux d'image, et ou de son et ou de données et ou de commande transmis par un flux. Le serveur de services peut également être un organe de stockage de tels signaux préenregistrés, c'est à dire un lecteur de CD-ROM, un lecteur de cassettes vidéo, un ordinateur personnel (PC) muni d'un disque dur (voire d'une mémoire non volatile) et d'une carte réseau connectée au réseau interne.

La machine cliente peut être une machine du même type que le serveur de services (mais agissant dans ce cas en tant que récepteur des signaux qui lui sont envoyés par le serveur de service). Pour simplifier les explications, la machine cliente comportera dans la suite de cet exposé un décodeur de signaux de télévision connecté à un moniteur de télévision, sans qu'on puisse y voir une limitation de la portée de l'invention.

La passerelle peut être du même type que les machines ci-dessus. Elle exerce en plus une fonction de routage au réseau de distribution, et, habituellement, la fonction DHCP d'attribution d'adresse.

L'attribution d'adresse longue. Elle est d'autant plus longue que plusieurs serveurs DHCP sont connectés au réseau interne.

Une solution a été proposée à ce problème par un groupe dit Digital Home Working Group. Celui-ci a changé de nom et est devenu le Digital Living Network Alliance: DLNA. Cette association regroupe les plus grandes entreprises de l'électronique au monde. Le but de cette association est de garantir une interopérabilité toujours plus facile des différents produits de chaque domaine entre eux. Elle concerne aussi bien à la téléphonie que l'informatique en passant par le cinéma à domicile. L'association DLNA définit, dans la dernière version 1.5 de sa norme, des règles pour aiguiller les fabricants afin qu'ils aillent tous dans le même sens. La technologie sous-jacente préconisée par l'association DLNA comprend un service réseau Universal Plug'n'Play (UPnP - mise en service automatique), un système de communication IP par réseau Ethernet, voire Wi-Fi, et le protocole HTTP pour véhiculer le contenu. Les terminaux de lecture doivent être capables de supporter les formats JPEG, MPEG 2 ou LPCM (Linear Pulse Code Modulation) pour interpréter l'information fournie. La norme DLNA prévoit d'inclure les formats GIF, PNG, TIFF, MP3, WMA, AC-3, AAC, ATRAC 3+, MPEG 4 et WMV 9.

Ces accords et règles sont toutefois insuffisants pour résoudre le problème ci-dessus. En effet, la norme DHCP prévoit d'attendre des délais avant de tenter les divers types de solution de connexion envisageables. L'attente de ces délais est admise dans le domaine professionnel, dans le domaine des entreprises, dans le domaine de l'informatique. Cette attente peut être longue, parfois de plusieurs minutes. Par contre, dans le domaine de la distribution de signaux audio-vidéo domestiques, à la maison, les utilisateurs sont trop impatients, et interviennent sur les différents appareils de leur réseau domestique avant que la reconnaissance ne se soit produite. De ce fait, avec les temps d'attente prévus, la mise en service d'une machine cliente n'est jamais réussie, puisque à chaque connexion et reconnexion, le protocole DHCP est réentrepris depuis le début.

Le même problème se présente lorsqu'un serveur DHCP est présent, qu'il a correctement effectué son travail, et que, pour des raisons domestiques, il est coupé. Dans ce cas, au bout de la durée des baux, le serveur DHCP coupé ne peut plus confirmer les adresses IP données, et le système ne fonctionne plus.

Dans l'invention, pour résoudre ce problème, on part du principe que le serveur de service, qui en définitive est le serveur de contenu, est connecté au réseau depuis longtemps. A ce titre, il a pu reconnaître le réseau, notamment pour savoir si un serveur DHCP est présent. Cette supposition est d'une part réaliste, et d'autre part nécessaire. En effet, il ne sert à rien de régler un problème de connexion d'un récepteur, formé par la machine cliente, à un émetteur, formé par le serveur de contenu, si le serveur de contenu n'est pas connecté au réseau de communication. Dans ces conditions, le serveur de services est considéré comme toujours disponible pour recevoir une requête émanant de la machine cliente, cette requête étant prévue pour la configurer. Le serveur de services peut alors répondre en donnant à la machine cliente les informations de configuration, et au besoin une adresse IP si le serveur de services sait qu'aucun serveur DHCP n'est présent dans le réseau. Au besoin, s'il donne en plus cette adresse IP, la machine cliente peut ignorer ultérieurement l'adresse fournie par le serveur DHCP.

En agissant ainsi, on est sûr qu'un acheteur d'un couple de machines, serveur de services et machine cliente du sur service, connectera d'abord le serveur de services au réseau et ensuite la machine cliente, ou du moins ne s'impatientera pas, et ne contrariera pas le protocole de connexion si le serveur de services n'est pas connecté. L'invention arrive ainsi à palier un défaut de fonctionnement d'une passerelle dotée d'une fonction DHCP lors de la connexion d'une nouvelle machine au réseau.

L'invention a donc pour objet un procédé de connexion d'une machine cliente à un réseau interne de transport de signaux de télévision, ces signaux de télévision comportant des signaux d'images et ou de son et ou de données et ou de commande, dans lequel
- une passerelle peut être connectée en interface entre ce réseau interne et un réseau de distribution externe,
- la passerelle est dotée d'une fonction DHCP d'attribution d'adresse sur le réseau interne,
- un serveur de services est connecté à ce réseau interne,
- le serveur de services émet des signaux de télévision sur le réseau interne,
- la machine cliente est connectée au réseau interne,
- une session DHCP d'acquisition d'adresse de connexion au réseau interne est lancée par la machine cliente lors de sa connexion,
caractérisé en ce qu'il comporte une étape au cours de laquelle,
- la machine cliente émet une requête spéciale destinée au serveur de service,
- le serveur de services émet une réponse immédiate à cette requête spéciale,
- cette réponse immédiate comporte des informations de configuration de la machine cliente et des informations relatives à l'adresse, sur le réseau interne, de la machine cliente.

Elle a également pour objet un dispositif de connexion d'une machine cliente à un réseau interne de distribution de signaux de télévision, ces signaux de télévision comportant des signaux d'images et ou de son et ou de données et ou de commande, ce réseau interne comportant un serveur de services qui émet des signaux de télévision sur le réseau interne, et une machine cliente dotée de moyen de lancer une session DHCP d'acquisition d'adresse de connexion au réseau interne lors de sa connexion, caractérisé en ce que la machine cliente comporte des moyens pour émettre une requête spéciale destinée au serveur de service, le serveur de services comporte des moyens pour émettre une réponse immédiate à cette requête spéciale, cette réponse immédiate comportant des informations de configuration de la machine cliente et des informations relatives à l'adresse sur le réseau interne de la machine cliente.

L'invention sera mieux comprise à la lecture de la description qui suit et à l'examen des figures qui l'accompagnent. Les figures montrent :
- figure 1 : une représentation schématique d'une installation domestique apte à mettre en oeuvre le procédé de l'invention ;
- figure 2 : un diagramme de flot de messages envoyés sur le réseau domestique lorsqu'un serveur de type DHCP est présent ;
- figure 3 : des représentations schématiques d'ordre DHCP d'un type nouveau selon l'invention, envoyés sur ce réseau interne et tendant à faciliter l'attribution des adresses de type IP ;
- figure 4 : un diagramme de flot, correspondant au diagramme de la figure 2 mais pour situation dans laquelle un serveur DHCP d'adresse IP n'est pas présent.

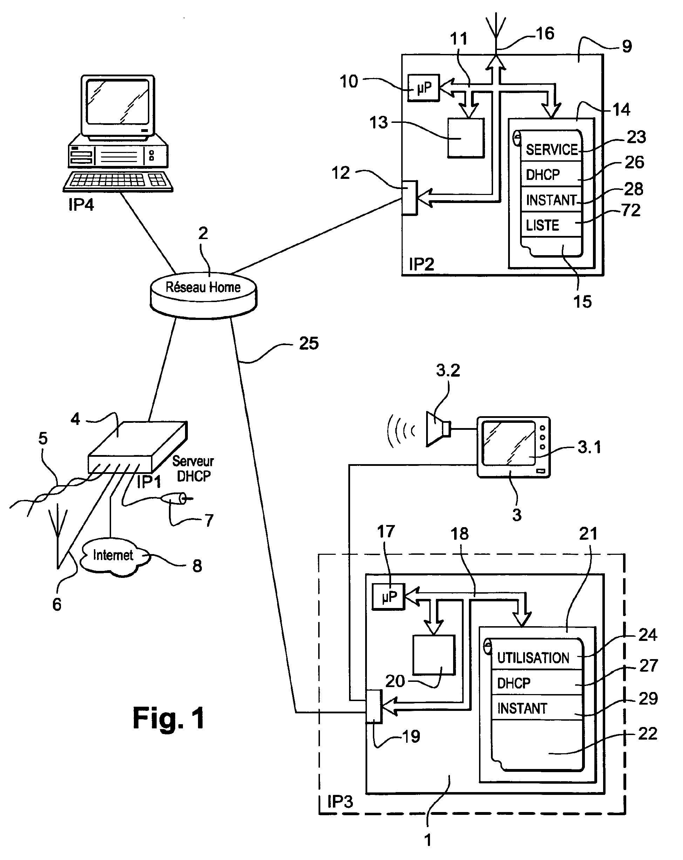

La figure 1 montre une installation utile pour mettre en oeuvre le procédé de l'invention. Cette installation comporte une machine cliente 1 destinée à être connectée à un réseau 2 de distribution interne de signaux de télévision. Le réseau 2 peut-être d'un type quelconque, notamment être de type ethernet, véhiculant des signaux sur des paires torsadées, être un réseau à connexion radioélectrique, par exemple typiquement de type WIFI, ou encore un réseau par courants porteurs, voire par lignes spécialisées. Les signaux échangés sur le réseau sont appelés globalement ici des signaux de télévision. Ils ont pour objet in fine de faire diffuser par un moniteur 3 de télévision relié à la machine cliente 1 des images et des sons, ou bien des images ou des sons tout seuls. Ces signaux peuvent aussi comporter des informations affichables en mode caractère sur le moniteur 3 (par opposition à un mode graphique qui associe ces informations à l'image des caractères). Ces informations peuvent également être des commandes tendant à configurer la machine cliente 1, voire le moniteur 3. Ces commandes dans ce cas ne sont pas diffusées par le moniteur 3. Le moniteur 3 comporte à cet effet un écran 3.1 et un haut-parleur 3.2.

Habituellement, un tel réseau 2 comporte un organe 4 serveur DHCP susceptible d'attribuer à chaque machine connectée au réseau 2 une adresse d'échange sur ce réseau, pour que des messages puissent s'échanger entre les différents appareils connectés d'une manière cohérente. L'invention vise à résoudre le cas où le serveur DHCP 4, soit n'est pas présent, soit est présent mais pas en service (il est par exemple éteint), soit le serveur 4 ne fonctionne pas correctement. De manière habituelle, un tel serveur DHCP est contenu dans une machine passerelle permettant l'interconnexion du réseau 2, interne, avec un réseau externe. Par exemple le réseau externe peut être relié, par ailleurs, à la passerelle 4 par une paire torsadée 5, une liaison hertzienne 6, un câble coaxial 7 ou tous autres moyens. En pratique, la passerelle 4 est essentiellement reliée par ces moyens au monde extérieur, notamment pour recevoir des émissions de télévision distribuées par des chaînes de télévision. La passerelle 4 est également reliée par ces mêmes moyens au réseau Internet 8. La passerelle 4 est dotée d'une fonction DHCP d'attribution d'adresse sur le réseau interne 2.

L'installation comporte encore un serveur 9 de services connecté au réseau 2. Ce serveur 9 de services qui est du même type physique que la machine cliente 1, possède fondamentalement un microprocesseur 10 relié par un bus 11 à une interface d'échange 12, à des périphériques divers représentés symboliquement par la référence 13, et à une mémoire programme 14 contenant un programme 15. Le serveur 9 de services est destiné à distribuer sur le réseau 2 les signaux de télévision évoqués ci-dessus, c'est-à-dire les images, les sons, les données, et les commandes. Les machines 1 et 9 peuvent être interverties dans une installation domestique, une se trouvant dans une pièce du domicile d'un ménage, l'autre se trouvant par exemple dans une autre pièce. Ce qui différencie le caractère serveur 9 de services et machine cliente 1 est que le serveur 9 de services est en définitive l'émetteur des signaux de télévision et que la machine cliente 1 en est le récepteur. Parmi les périphériques 13 contenus dans le serveur 9 de services on peut prévoir un dispositif de stockage du type disque dur ou une mémoire non volatile (par exemple de type flash), un lecteur de CD-ROM, un lecteur de vidéo cassettes et tout autre moyen de mise à disposition de signaux de télévision, tel qu'une antenne radioélectrique 16 recevant des émissions du monde extérieur.

Le problème rencontré dans le cadre de l'invention est celui de la connexion, nouvelle, de la machine cliente 1 au réseau 2 alors que le serveur DHCP 4 ne fait pas, ou fait mal, son travail. En effet dans ce cas l'utilisateur qui arrive chez lui au retour du magasin déballe sa machine cliente 1 l'installe dans son salon, la connecte au réseau 2, et étonné de ne recevoir aucune information en provenance du serveur 9 de services qu'il a par ailleurs déjà connecté à son réseau. Il ne comprend pas pourquoi le démarrage n'est pas immédiat.

En effet, en application du protocole DHCP évoqué ci-dessus, la machine cliente 1 va chercher à reconnaître l'existence d'un serveur de type DHCP pour se configurer correctement sur le réseau 2. Normalement le protocole DHCP prévoit, du fait des nombreuses opérations à réaliser et des éventuels défauts de transmission, des temps d'attente entre chacune des actions lancées automatiquement entre le serveur 4 et la machine 1. Il arrive que, même dans des situations ou tout fonctionne bien, du fait par exemple de l'occupation du réseau 2 ou du fait de la présence de serveurs DHCP concurrents, le temps d'attente dépasse la minute. Dans ce cas, on constate que l'utilisateur n'a pas eu la patience. Il a commencé à débrancher et rebrancher la machine cliente 1 sans se rendre compte qu'à chaque fois le protocole DHCP était réinitialisé au début, et que tout le temps passé devait être à nouveau attendu. On aboutit à des situations où au bout de 20 minutes d'essais infructueux, l'utilisateur cherche à entrer en relation avec le service technique du vendeur de la machine cliente 1 pour réussir la connexion.

Dans l'invention, on maintient l'existence de l'émission par la machine cliente 1 d'une session d'acquisition d'adresse de connexion au réseau interne. Cette session est naturellement de type DHCP puisque cette norme est la plus utilisée actuellement.

Typiquement la machine cliente 1 possède une architecture 17 à 21, respectivement correspondante à l'architecture 10 à 14 du serveur 9 de services. Notamment la mémoire programme 21 de la machine cliente 1 comporte un programme 22.

Le serveur 9 de services possède dans le programme 15 un sous programme général de services 23, le sous programme 23 correspondant à un sous programme d'utilisation 24 dans le programme 22. Les programmes 23 et 24 conduisent à échanger des informations sur le bus 25 du réseau 2 qui permettent d'éditer avec le moniteur 3 les signaux de télévision distribués par le serveur 9 de services.

De la même façon que le programme 14 comporte un sous programme 26 de type DHCP, le programme 22 comporte un sous programme 27 de type DHCP. Ces programmes 26 et 27 sont classiques. Ils permettent à chacune des machines, lorsqu'elles se connectent au réseau 2, d'interroger le serveur DHCP 4 pour que celui-ci leur confère une adresse de réseau de type IP. La machine cliente 1 émet donc avec le sous programme 27, une requête normale d'acquisition d'adresse de connexion au réseau interne 2 lors de sa connexion.

Dans l'invention on a complété les sous programmes 26 et 27 pour leur adjoindre des sous programmes respectivement 28 et 29 de connexion instantanée, de manière à recevoir dans ces deux appareils immédiatement des informations relatives à leur mutuelle connexion. Dans le procédé de l'invention, le sous programme 29 INSTANT de la machine 1 conduit à émettre une requête spéciale immédiate destinée au serveur 9 de service, lors de la connexion (ou de la mise en service) de la machine cliente 1 sur le réseau 2. Le serveur 9 de services émet alors, avec le sous programme 28 INSTANT, une réponse immédiate à cette requête spéciale. La réponse immédiate comporte des informations de configuration de la machine cliente 1 ainsi que des informations relatives à l'adresse sur le réseau interne 2 de la machine cliente 1.

Les informations de configuration de la machine cliente 1 sont des informations diverses, notamment relatives aux formats supportés par le serveur 9 de services et qui correspondent aux formats supportés par la machine cliente 1. Par ces formats on entend typiquement les formats d'image ou de son cités ci-dessus, avec une indication de la version de mise à jour supportée pour ces formats, ainsi que des informations de débit sur le bus 25, dans l'accès à la machine cliente 1, et le débit possible par le serveur 9 de services. D'autres informations peuvent être prévues, relatives notamment à des allocations de codes secrets de déchiffrement pour déchiffrer dans la machine cliente 1, les informations délivrées par le serveur 9 de services, et qui seraient chiffrées sur le bus 25, de manière à en interdire la duplication. Ces informations de configuration sont multiples elles peuvent être communiquées immédiatement par le serveur 9 de services à la machine cliente 1.

En outre le serveur 9 de services donne à la machine cliente 1 des informations relatives à l'adresse IP sur le réseau interne 2 de la machine cliente 1. Ces informations relatives à l'adresse peuvent être de deux types. Soient elles sont des informations d'attente, invitant la machine cliente 1 à attendre que la passerelle serveur DHCP 4, que le serveur 9 de services sait être en service, lui transmette une adresse de réseau. Soit ces informations relatives à l'adresse sont l'information d'adresse elle-même, avec ou non une instruction d'ignorer une attribution ultérieure d'adresse à la machine cliente 1 par le serveur d'adresse DHCP 4.

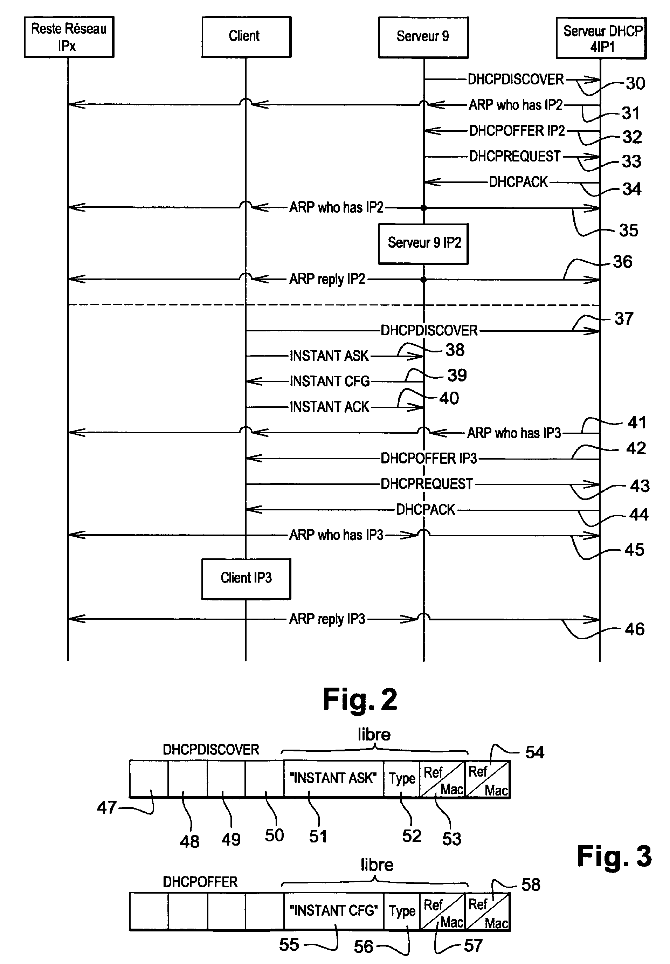

La figure 2 montre, dans le cas ou le serveur 4 d'adresse DHCP est présent, le fonctionnement des attributions d'adresse selon l'invention. Selon une caractéristique essentielle de l'invention, le serveur 9 de services est présent est actif dans le réseau 2, de même que la passerelle 4 serveur d'adresse DHCP, avant que la machine cliente 1 ne se connecte au réseau 2.

Au cours d'une durée préalable à cette communication, le serveur 9 de services a émis une requête 30 sur le bus du réseau 25 à destination du serveur 4 DHCP. Le serveur 4 d'adresse DHCP, lui-même situé à l'adresse IP1, envoie alors une question de type ARP au réseau 2 pour savoir si une adresse IP2, que le serveur 4 devrait essayer d'attribuer au serveur 9 est disponible. Cet envoi se produit au cours d'une étape 31. Si l'adresse IP2 est disponible, le serveur 4 fait l'offre au serveur 9 de lui attribuer l'adresse IP2 au cours d'une étape 32. Au cours d'une étape 33, le serveur 9 accepte l'adresse IP2 et envoie une requête d'attribution définitive au serveur d'adresse DHCP 4. Au cours d'une étape 34 suivante, le serveur d'adresse 4 confirme définitivement au serveur 9 l'adresse IP2 attribuée.

Par la suite, au cours d'une étape 35 le serveur 4 (voire le serveur 9) lance une question sur le réseau 2 de type ARP, concernant l'adresse IP2 au cours d'une étape 35. Naturellement, le serveur 9 à l'adresse IP2 répond dans une étape 36 ultérieure en transmettant son adresse MAC signifiant ainsi que, pour le réseau 2, l'adresse IP2 est associé avec l'adresse MAC du serveur 9. On considère que toutes ses opérations sont préalables à la connexion sur le réseau 2 de la machine cliente 1.

En effet, comme expliqué ci-dessus, dans l'invention on considère que, pour qu'une machine cliente 1 puisse solliciter un contenu d'un serveur 9 de services il est nécessaire que ce serveur 9 de services soit préalablement connecté au réseau. Sinon il n'y a pas lieu de tenter quoi que ce soit pour résoudre le problème puisqu'il est insoluble.

Lors de sa connexion ultérieure au réseau 2, la machine cliente 1 lance, selon l'invention, deux opérations. Premièrement elle lance une requête en attribution d'une adresse DHCP à l'étape 37 en application du sous programme 27 contenu dans le programme 22. Cette requête est conforme au protocole DHCP. Cette étape 37 va être normalement suivie d'étapes similaires aux étapes 31 à 36 vues ci-dessus.

Cependant en outre, à l'aide du sous programme 29, la machine cliente 1 lance sur le réseau 2 une requête instantanée au cours d'une étape 38. Cette étape 38 est effectuée en exécution du sous programme 29 du programme 22. La requête instantanée 38 est envoyée en mode diffusion sur le réseau 22, de façon à ce que toutes les machines connectées au réseau puissent la recevoir. Le serveur 9 de services reçoit donc la requête de l'étape 38. Le serveur 9 de services y répond au cours d'une étape 39 mise en oeuvre à l'aide du sous programme 28 du programme 15. La réponse du serveur 9 de services est envoyée également en mode diffusion.

Pour que la machine cliente 1 puisse la recevoir diverses solutions sont possibles. Soit la requête de l'étape 38 possède une référence de question, que le serveur 9 de services réplique dans sa réponse à l'étape 39. Soit, au lieu d'avoir une référence de question, tout simplement la question de l'étape 38 comporte la désignation de l'adresse MAC (ou autre) à titre de référence, de la machine cliente 1. Dans ce cas à l'étape 39, la réponse du serveur 9 de services comporte cette référence, cette adresse MAC, pour que la machine cliente 1 puisse en exploiter le contenu. Eventuellement au cours d'une étape ultérieure 40 la machine cliente 1 peut informer le serveur 9 de services qu'elle a bien pris en compte les instructions de configuration qui lui ont été transmises par le serveur 9 de services. Pour que l'accusé de réception transmis à l'étape 40 soit compris, il peut être envoyé lui aussi en mode diffusion, lui aussi avec une référence attachée. En variante, il peut-être envisageable qu'au cours des étapes 38 à 40 le serveur 9 de services et la machine cliente 1 s'échangent leurs adresses MAC de manière à se reconnaître.

Cette action est immédiate et en pratique dure moins d'une seconde, de sorte que provisoirement, le serveur 9 de services peut envoyer toutes les informations voulues à la machine cliente 1 de façon à ce que l'utilisateur puisse voir apparaître immédiatement sur le moniteur 3 des informations montrant la progression et l'accomplissement cohérent de la configuration de la machine cliente 1.

Par la suite, le serveur DHCP 4 initie une série d'étapes 41 à 46 en tout point comparable aux étapes 31 à 36 et visant à conférer à la machine cliente 1 L'adresse de réseau IP3.

La figure 3 montre la structure, en termes de contenu, d'un message de type DHCP véhiculé sur le réseau 2 et apte à permettre la connexion immédiate recherchée. Dans l'invention, de préférence, la requête 37 et la requête 38, non seulement sont envoyées en même temps, mais en outre elles peuvent être fondues dans une même requête de type DHCP. En effet les requêtes DHCP comportent dans leur partie contenu, des zones obligatoires telles que 47 à 50, et des zones libres. Dans ce cas, la requête 37-38 aura pour objet de remplir une zone libre 51 avec une désignation d'un type de question, ici la question INSTANT ASK montrant que la machine cliente 1 demande attribution d'une adresse IP.

Autrement, la question 38 est autonome et comporte des attributs que peut reconnaître un serveur 9 de services s compatible avec la machine cliente. Typiquement cette compatibilité est liée au fait que ces deux machines sont fabriquées par un même fabricant et comprennent un protocole d'échange qui est la propriété de ce fabricant.

Dans une autre zone libre 52, la question 37 ou la question 37-38 pourra comporter un type de matériel auquel cette question est adressée. Le type, d'une manière simple, peut être la désignation d'un constructeur : le constructeur désire que ses appareils puissent bien communiquer entre eux, sous réserve de posséder un signe, en zone 52, relatif à cette désignation. Eventuellement, le type peut concerner un type de machine, une classe de machine (par exemple les lecteurs de CD-ROM ou bien les lecteurs enregistreurs de CD-ROM). En outre, dans deux zones libres supplémentaires 53 et 54, le message de l'étape 37 ou de l'étape 37-38 pourra comporter les références de la question et ou l'adresse MAC de l'émetteur de la question (la machine cliente 1), et ou l'adresse MAC du destinataire de la question, le serveur 9 de services.

Dans le cas où le serveur 9 de services laisse au serveur DHCP 4 l'autorité de conférer les adresses IP, il répond au cours d'une étape 39, très rapidement après l'étape 38 (qui est simultanée à l'étape 37) avec une instruction INSTANT CFG. Cette instruction INSTANT CFG pourrait, par exemple, être insérée dans une réponse du type DHCPOFFER, ou autre dans des zones libre 55 a 58.

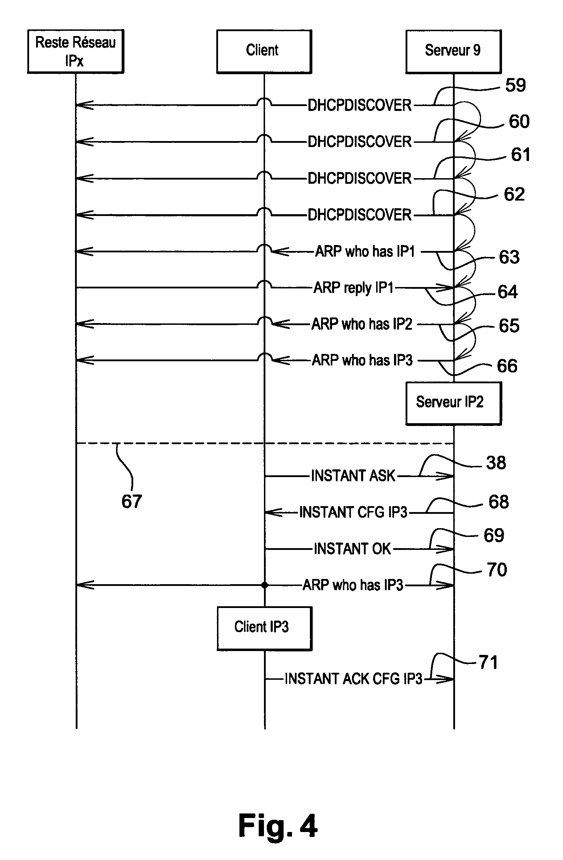

La figure 4 montre la réponse du serveur 9 de services lorsque le serveur 9 de services a détecté que le serveur DHCP 4 n'est plus en service. Typiquement, à la fin de son bail, le serveur 9 au cours d'une étape 59, réitérée par exemple 4 fois jusqu'à l'étape 62, a interrogé le réseau 2 pour connaître l'état de fonctionnement d'un serveur DHCP 4. Sur l'absence de réponse d'un tel serveur DHCP, le serveur 9 lance alors une série de requêtes de type ARP who has, classiques, pour connaître quelles adresses IP sont disponibles dans le réseau 2.

Les adresses IP disponibles que le serveur 9 de services cherche à identifier peuvent être soit les premières adresses d'une déclinaison d'adresses que le serveur 9 de services teste à chaque fois qu'il est dans une telle situation. Elles peuvent autrement être des adresses préalablement connues du serveur 9 de services ou préalablement attribuées à d'autres appareils et que le serveur 9 de services possède dans sa mémoire. Le serveur 9 peut ainsi mémoriser des adresses ayant déjà servi, lors de baux précédents, ou mémoriser une liste d'adresses disponibles, qui n'ont jamais servi.

Ainsi typiquement, au cours d'une étape 63, le serveur 9 de services a pu constater que l'absence de réponses à l'adresse IP1 a signifié que le serveur 4 d'adresse DHCP est hors service. Typiquement, le sous programme 28 du programme 15 comportera une opération de mémorisation de ces adresses préalablement allouées, et des instructions pour une tentative de vérification de ce qu'un serveur d'adresse DHCP identifié à l'adresse ici IP1, est en service ou non. Sur une absence de réponse 64, après un certain délai, le serveur 9 teste l'adresse IP2 pour savoir si elle est attribuée ainsi que de préférence une troisième adresse IP3. L'absence de réponses aux étapes 65 et 66 pour ces différentes adresses permet au serveur 9 de services de retenir pour lui l'adresse DHCP IP2, et de garder en réserve pour une attribution ultérieure à une autre machine l'adresse IP3, compte tenu que celle-ci lui apparaît disponible.

Aussi dès qu'à l'étape 67 la machine cliente 1 est connectée et que celle-ci lance selon ce qui a été vu précédemment une question 38 de demande de connexion immédiate (en plus d'une question 37 dont on sait qu'elle n'aboutira pas puisque le serveur 4 d'adresse DHCP est hors service), le serveur 9 émet en direction de la machine cliente 1 une réponse 68 en tout point comparable à la réponse 39, sauf qu'en plus des attributs de configuration, le serveur 9 de services attribue à la machine cliente 1 l'adresse IP3 sur le réseau 2. En réponse à cette attribution d'adresse, la machine cliente 1 répond instantanément au cours d'une étape 69 pour indiquer qu'elle prend effectivement en compte l'adresse IP3 pour elle-même, ainsi que les configurations de format qu'il lui on été attribuées. Ensuite la machine cliente 1 ou le serveur 9 lance une question du type ARP who has pour compléter le jumelage entre l'adresse MAC de la machine cliente 1 et l'adresse IP3 qui lui a été attribué. En réponse la machine cliente 1 émet sur le réseau 2 un message de confirmation de ce jumelage. Ce jumelage est en tout point comparable à celui de l'étape 45 et notamment le message de confirmation peut avoir un même format qu'un message de type ARP reply.

Au cours de l'étape 39 il est possible que le serveur 9 de services attribue à la machine cliente 1, de même qu'à l'étape 68, une adresse réseau IP3. Dans ce cas le sous programme 28 du programme 15 et le sous programme 27 du programme 22 comporteront des ensembles d'instructions permettant à la machine cliente 1 d'ignorer, par la suite, une adresse réseau qui lui serait communiquée par le serveur d'adresse DHCP 4 remis en service.

## Revendications

1. Procédé de connexion d'une machine cliente à un réseau interne de distribution de signaux de télévision, ces signaux de télévision comportant des signaux d'images et ou de son et ou de données et ou de commande, dans lequel
- on connecte éventuellement une passerelle en interface entre ce réseau interne et un réseau de distribution externe,
- on dote la passerelle d'une fonction DHCP d'attribution d'adresse sur le réseau interne,
- on connecte un serveur de services à ce réseau interne,
- le serveur de services émet des signaux de télévision sur le réseau interne,
- on connecte la machine cliente au réseau interne,
- une session DHCP d'acquisition d'adresse de connexion au réseau interne est lancée par la machine cliente lors de sa connexion,
**caractérisé en ce qu'**elle comporte une étape au cours de laquelle,
- la machine cliente émet en mode diffusion une requête spéciale destinée au serveur de service,
- la requête spéciale souscrit, au format DHCP et comporte en zone libre une référence à une question,
- le serveur de services émet une réponse immédiate à cette requête spéciale, cette réponse immédiate au format DHCP comportant en zone libre la référence à la question,
- cette réponse immédiate comportant des informations de configuration de la machine cliente et des informations relatives à l'adresse sur le réseau interne de la machine cliente.

2. Procédé selon la revendication 1, **caractérisé en ce qu'**il comporte une étape dans laquelle
- le serveur de services attribue à la machine cliente, avec les informations relatives à l'adresse de la réponse immédiate, une adresse sur le réseau interne.

3. Procédé selon la revendication 2, **caractérisé en ce qu'**il comporte une étape dans laquelle
- la machine cliente ignore ultérieurement une adresse IP qui lui est attribuée par la passerelle DHCP.

4. Procédé selon la revendication 1, **caractérisé en ce qu'**il comporte une étape dans laquelle
- le serveur de services demande à la machine cliente d'attendre que la passerelle, ou une autre machine qui est dotée d'une fonction DHCP d'attribution d'adresse sur le réseau interne, attribue une adresse sur le réseau interne à la machine cliente.

5. Procédé selon l'une des revendication 1 à 4, **caractérisée en ce que**
- la requête spéciale comporte une information de sollicitation d'un serveur de services d'un type donnée pour que ce serveur de services émette la réponse immédiate attendue.

6. Procédé selon l'une des revendications 1 à 5, **caractérisé en ce que**
- le serveur de services tient à jour une liste des adresses de réseau utilisées par le réseau interne et ou disponibles sur le réseau interne.

7. Procédé selon l'une des revendications 1 à 6, **caractérisé en ce que**
- la requête spéciale souscrit au format des requêtes DHCP.

8. Système comportant une machine cliente, un serveur de services à et un réseau interne de distribution de signaux de télévision, la machine cliente étant connectée à ce réseau interne, ce serveur de services émettant sur ce réseau interne des signaux de télévision comportant des signaux d'images et ou de son et ou de données et ou de commande, ladite machine cliente étant dotée de moyens de lancer une session DHCP d'acquisition d'adresse de connexion au réseau interne lors de sa connexion, **caractérisé en ce que** la machine cliente comporte des moyens pour émettre une requête spéciale destinée au serveur de service, la requête spéciale souscrivant au format DHCP et comportant en zone libre une référence à une question, le serveur de services comportant des moyens pour émettre une réponse immédiate à cette requête spéciale, cette réponse immédiate au format DHCP comportant en zone libre la référence à la question, et comportant des informations de configuration de la machine cliente et des informations relatives à l'adresse sur le réseau interne de la machine cliente.

9. Système selon la revendication 8, **caractérisé en ce qu'**il comporte une passerelle connectée en interface entre ce réseau interne et un réseau de distribution externe, la passerelle étant dotée d'une fonction DHCP d'attribution d'adresse sur le réseau interne, le serveur de services comportant des moyens pour attribuer à la machine cliente, avec les informations relatives à l'adresse de la réponse immédiate, une adresse sur le réseau interne, et la machine cliente comportant des moyens pour ignorer ultérieurement une adresse IP qui lui est attribuée par la passerelle DHCP.

10. Système selon l'une des revendications 8 à 9, **caractérisé en ce que**; la machine cliente comporte des moyens pour que la requête spéciale comporte une information de sollicitation d'un serveur de services d'un type donnée, et **en ce que** le serveur de services comporte des moyens pour se reconnaître dans le type et émettre la réponse immédiate attendue.

11. Système selon l'une des revendications 8 à 10, **caractérisé en ce que** le serveur de services comporte des moyens pour tenir à 1our u ne liste d'adresses d e réseau utilisées par le réseau interne et ou disponibles sur le réseau interne.

12. Système selon l'une des revendications 8 à 11, **caractérisé en ce que** la machine cliente et ou respectivement le serveur de services comportent des moyens pour que la requête spéciale et ou la réponse spéciale souscrivent au format des requêtes DHCP.

## Claims

1. A method of connection of a client machine to an internal television signal distribution network, these television signals including image and or sound and or data and or command signals, in which
- it is possible to connect a gateway interface between this internal network and an external distribution network,
- the gateway includes a DHCP function for address assignment on the internal network,
- a services server is connected to this internal network,
- the services server emits television signals on the internal network,
- the client machine is connected to the internal network,
- a DHCP session for acquiring an internal network connection address is launched by the client machine when it is connected,
**characterised in that** it includes a step during which,
- the client machine emits in diffusion mode a special request destined for the services server,
- the special request is in DHCP format and includes in free zone a reference to a question,
- the services server emits an immediate reply to this special request, this immediate reply in DHCP format including the reference in free zone to the question,
- this immediate reply including configuration information of the client machine and information relating to the internal network address of the client machine.

2. A method according to claim 1, **characterised in that** it includes a step in which
- the services server assigns an internal network address with information relating to the address of the immediate reply to the client machine.

3. A method according to claim 2, **characterised in that** it includes a step in which
- the client machine later ignores an IP address which is assigned to it by the DHCP gateway.

4. A method according to claim 1, **characterised in that** it includes a step in which
- the services server asks the client machine to wait until the gateway, or another machine which has a DHCP function for assigning addresses on the internal network, assigns an internal network address to the client machine.

5. A method according to one of claims 1 to 4, **characterised in that**
- the special request includes services server requesting information of data type so that this services server emits the expected immediate reply.

6. A method according to one of claims 1 to 5, **characterised in that**
- the services server keeps an up-to-date list of network addresses used by the internal network and or available on the internal network.

7. A method according to one of claims 1 to 6, **characterised in that**
- the special request is in the DHCP requests format.

8. A system comprising a client machine, a services server and an internal television signal distribution network, the client machine being connected to this internal network, this services server emitting, on this internal network, television signals including image and or sound and or data and or command signals, the said client machine having means for launching a DHCP session for acquiring an internal network connection address when it is connected, **characterised in that** the client machine includes means for emitting a special request destined for the services server, the special request being in DHCP format and including a free zone reference to a question, the services server including means for emitting an immediate reply to this special request, this immediate reply in DHCP format including in free zone the reference to the question, and including configuration information of the client machine and information relating to the internal network address of the client machine.

9. A system according to claim 8, **characterised in that** in includes a gateway interface between this internal network and an external distribution network, the gateway having a DHCP function for assigning addresses on the internal network, the services server including means for assigning an internal network address to the client machine, with information relating to the address of the immediate reply, and the client machine including means for later ignoring an IP address which is assigned to it by the DHCP gateway.

10. A system according to one of claims 8 to 9, **characterised in that** the client machine includes means so that the special request includes services server requesting information of data type, and so that the services server includes means for recognising itself in the type and emits the expected immediate reply.

11. A system according to one of claims 8 to 10, **characterised in that** the services server includes means for keeping an up-to-date list of network addresses used by the internal network and or available on the internal network.

12. A system according to one of claims 8 to 11, **characterised in that** the client machine, and or respectively the services server, includes means so that the special request and or the special reply are in DHCP requests format.

## Patentansprüche

1. Verfahren zum Anschluss einer Kundenmaschine an ein internes Verteilernetzwerk von Fernsehsignalen, wobei diese Fernsehsignale Bild- und/ oder Ton- und/ oder Daten- und/ oder Steuersignale enthalten, bei dem
- man eventuell ein Gateway als Schnittstelle zwischen diesem internen Netzwerk und einem externen Verteilernetzwerk anschließt,
- man das Gateway mit einer DHCP Funktion für die Zuordnung einer Adresse im internen Netzwerk ausstattet,
- man ein Servicemodul an dieses interne Netzwerk anschließt,
- das Servicemodul Fernsehsignale im internen Netzwerk ausstrahlt,
- man die Kundenmaschine an das interne Netzwerk anschließt,
- von der Kundenmaschine bei deren Anschluss eine DHCP Session zum Erwerb einer Adresse zur Verbindung mit dem internen Netzwerk gestartet wird,
**dadurch gekennzeichnet, dass** sie eine Etappe enthält, im Laufe derer
- die Kundenmaschine im Funkmodus einen Sonderantrag an das Servicemodul aussendet,
- der Sonderantrag das DHCP Format unterstützt und In der freien Zone einen Bezug zu einer Frage enthält,
- das Servicemodul eine umgehende Antwort auf diesen Sonderantrag aussendet, wobei diese umgehende Antwort im DHCP Format in der freien Zone den Bezug zur Frage enthält,
- diese umgehende Antwort Informationen zur Konfiguration der Kundenmaschine und Informationen in Bezug auf die Adresse der Kundenmaschine im internen Netzwerk enthält.

2. Verfahren nach Anspruch 1, **dadurch gekennzeichnet, dass** es eine Etappe enthält, bei der
- das Servicemodul der Kundenmaschine gemeinsam mit den Informationen über die Adresse der umgehenden Antwort eine Adresse im internen Netzwerk zuordnet.

3. Verfahren nach Anspruch 2, **dadurch gekennzeichnet, dass** es eine Etappe enthält, bei der .
- die Kundenmaschine später eine IP Adresse ignoriert, die ihr durch das DHCP Gateway zugeordnet wird.

4. Verfahren nach Anspruch 1, **dadurch gekennzeichnet, dass** es eine Etappe enthält, bei der
- das Service modul die Kundenmaschine beauftragt, zuzuwarten, bis das Gateway oder eine andere Maschine, die mit einer DHCP Funktion für die Zuordnung einer Adresse im internen Netzwerk ausgestattet ist, der Kundenmaschine eine Adresse im internen Netzwerk zugeordnet hat.

5. Verfahren nach einem der Ansprüche 1 bis 4, **dadurch gekennzeichnet, dass**
- der Sonderantrag eine Information zur Beanspruchung eines Servicemoduls eines bestimmten vorgegebenen Typs enthält, damit dieses Servicemodul die erwartete umgehende Antwort aussendet.

6. Verfahren nach einem der Ansprüche 1 bis 5, **dadurch gekennzeichnet, dass**
- das Servicemodul eine Liste mit Netzwerkadressen führt, die vom internen Netzwerk verwendet werden und/ oder im internen Netzwerk verfügbar sind.

7. Verfahren nach einem der Ansprüche 1 bis 6, **dadurch gekennzeichnet, dass**
der Sonderantrag das Format der DHCP Anträge unterstützt.

8. System mit einer Kundenmaschine, einem Servicemodul und einem internen Verteilernetzwerk von Fernsehsignalen, wobei die Kundenmaschine an das interne Netzwerk angeschlossen ist, dieses Servicemodul Fernsehsignale im internen Netzwerk ausstrahlt, die Bild- und/oder Ton- und/ oder Daten- und/ oder Steuersignale enthalten, die besagte Kundenmaschine über entsprechende Mittel verfügt, um bei der Verbindung eine DHCP Session für den Erwerb einer Verbindungsadresse mit dem internen Netzwerk zu starten, **dadurch gekennzeichnet, dass** die Kundenmaschine über Mittel zum Aussenden eines Sonderantrags verfügt, der für das Servicemodul bestimmt ist, wobei der Sonderantrag das DHCP Format unterstützt und in der freien Zone einen Bezug zu einer Frage enthält, und das Servicemodul über Mittel zum Aussenden einer umgehenden Antwort auf diesen Sonderantrag verfügt, wobei diese umgehende Antwort im DHCP Format in der freien Zone den Bezug zur Frage enthält, sowie Informationen zur Konfiguration der Kundenmaschine und Informationen in Bezug auf die Adresse der Kundenmaschine im internen Netzwerk.

9. System nach Anspruch 8, **dadurch gekennzeichnet, dass** es ein Gateway als Schnittstelle zwischen diesem internen Netzwerk und einem externen Verteilernetzwerk enthält, wobei das Gateway mit einer DHCP Funktion für die Zuordnung einer Adresse im internen Netzwerk ausgestattet ist, und das Servicemodul über Mittel verfügt, um der Kundenmaschine gemeinsam mit den Informationen über die Adresse der umgehenden Antwort eine Adresse im internen Netzwerk zuzuordnen, und die Kundenmaschine über Mittel verfügt, um später eine IP Adresse zu ignorieren, die ihr vom DHCP Gateway zugeordnet wird.

10. System nach einem der Ansprüche 8 bis 9, **dadurch gekennzeichnet, dass** die Kundenmaschine über entsprechende Mittel verfügt, damit der Sonderantrag eine Information über die Beanspruchung eines Servicemoduls eines bestimmten vorgegebenen Typs enthält und **dadurch**, dass dieses Servicemodul über Mittel verfügt, um sich im Typen zurechtzufinden, und um die erwartete umgehende Antwort auszusenden.

11. System nach einem der Ansprüche 8 bis 10, **dadurch gekennzeichnet, dass** das Servicemodul über Mittel verfügt, um eine Liste mit Netzwerkadressen zu führen, die vom internen Netzwerk verwendet werden und/ oder im internen Netzwerk verfügbar sind.

12. System nach einem der Ansprüche 8 bis 11, **dadurch gekennzeichnet, dass** die Kundenmaschine und/ oder das Servicemodul jeweils über die entsprechenden Mittel verfügen, damit der Sonderantrag und/ oder die Sonderantwort das Format der DHCP Anträge unterstützen.
